(19) Europäisches Patentamt

European Patent Office

Office européen des brevets

(11) **EP 1 191 038 B1**

(12) **EUROPEAN PATENT SPECIFICATION**

(45) Date of publication and mention
of the grant of the patent:
**02.02.2005 Bulletin 2005/05**

(51) Int Cl.⁷: **C08B 1/00**, C08J 3/09,
C08L 1/02

(21) Application number: **00124462.3**

(22) Date of filing: **08.11.2000**

(54) **Process for preparing homogeneous cellulose solution by using supercooled liquid n-methymorpholine-n-oxide hydrate solvent**

Verfahren zur Herstellung einer homogenen Celluloselösung in flüssigem und unterkühltem N-Methylmorpholin-N-Oxid

Procédé de préparation d'une solution homogène de cellulose à partiar de N-Methylmorpholine-N-Oxyde sous forme liquide et en surfusion

(84) Designated Contracting States:
**AT DE GB**

(30) Priority: **26.09.2000 KR 2000056462**

(43) Date of publication of application:
**27.03.2002 Bulletin 2002/13**

(73) Proprietor: **Korea Institute of Science and Technology
Seoul 136-130 (KR)**

(72) Inventors:
• **Lee, Wha Seop
60 Cheongdam-dong, Kangnam-ku, Seoul (KR)**
• **Jo, Seong Mu
Seoul (KR)**
• **Ko, Seok Gu
Seoul (KR)**

• **Kim, Dong Bok
Seoul (KR)**

(74) Representative: **von Füner, Nicolai, Dr. et al
v. Füner Ebbinghaus Finck Hano
Patentanwälte
Mariahilfplatz 2&3
81541 München (DE)**

(56) References cited:
**WO-A-97/47790          US-A- 5 656 224**

• **"Spherulitic precipitation of cellulose from amine-oxide solutions"** JOURNAL OF POLYMER SCIENCE, POLYMER LETTERS EDITION., vol. 22, no. 3, 1 March 1984 (1984-03-01), pages 163-171, XP002185925 JOHN WILEY AND SONS. NEW YORK., US

**Description**

BACKGROUND OF THE INVENTION

Field of the Invention

The present invention relates to a process for preparing a homogeneous cellulose solution and more particularly, to a process for preparing a homogeneous cellulose solution which is capable of, forming a mixture where a cellulose pulp powder is mixed and swollen with a liquid N-methylmorpholine-N-oxide (hereinafter, referred to as NMMO) hydrate solvent supercooled under a melting point and subjecting the mixture to a dissolution treatment, thereby producing a homogeneous cellulose solution having a substantially low decomposition characteristic which is used in a cellulose fiber or film manufacturing field, in easy and fast manner.

Description of the Related Art

An NMMO hydrate solvent functions as a cellulose non-solvent (hereinafter, referred to as NMMO non-solvent), if it has a water content of about 18 % or more by weight, thereby swelling the cellulose, and as a cellulose solvent (hereinafter, referred to as NMMO solvent), if it has a water content of about 18 % or less by weight, thereby dissolving the cellulose.

Conventionally known processes for preparing the cellulose solution by using such the NMMO solvent are as follows:

First, a cellulose pulp sheet is mixed and swollen with the NMMO non-solvent having a water content of 22 % by weight and then, a large amount of water contained in the mixture is distilled and removed, thereby dissolving the cellulose (For example, see U.S. Patent No. 4,142,913, U.S. Patent No. 4,144, 080, U.S. Patent No. 4,196,282 and U.S. Patent No. 4,246,221). However, the above-mentioned processes should require a long time for distillation of the water under the pressure reduction at the existence of the cellulose, thereby resulting in a large amount of energy consumption and a long solution preparing time. As a result, the processes suffer from problems that the decomposition of the cellulose and the discoloration of the NMMO are serious.

As another example, European Patent No. 356,419 discloses the cellulose solution preparation process in which the cellulose is swollen in an NMMO non-solvent having a water content of 40 % by weight and then, pressure-reduced and distilled in a screw extruder on which a fan type flight is mounted. As yet another example, International Patent Application Publication No. WO 94/06530 discloses the cellulose solution preparation process using a thin film evaporator as the pressure-reducing distiller. However, the above-referenced processes suffer from problems that the productivity thereof is low and the process and apparatus are complicated.

Second, a pulp sheet is swollen in a liquid NMMO solvent (having a water content of 15 % by weight) at a temperature in the range of 85 °C to 95 °C over a melting point and the resulting mixture is swirled and heated without any concentration process, thereby producing the cellulose solution. This process is disclosed in U.S. Patent No. 4,211,574. In this way, a gel film is undesirably formed on the surface of the pulp sheet, which serves to inhibit the NMMO solvent from being forced into the interior of the pulp sheet, thereby resulting in the failure of the production of a homogeneous solution.

Third, the cellulose powder and a NMMO solvent powder are simply mixed and dissolved by means of an extruder, thereby producing the cellulose solution (For example, see SU 1645308 A1). In case of the two components having a large amount, however, a part of the cellulose powder remains at the non-dissolved state in the produced solution, thereby resulting in the failure of the production of a homogeneous solution.

On the other hand, a solid NMMO solvent (having a melting point of 78 °C) at a room temperature and cellulose pulp pieces are thrown into a disintegration mixing mill and disintegrated and mixed at a temperature in the range of 40 °C to 100 °C, thereby producing pellet type mixing granules. Next, the granules are thrown into an extruder, thereby producing the cellulose solution. For example, this process is disclosed in U.S. Patent No. 5,584,919. In this case, however, there occur some problems that it is difficult in producing and treating the solid NMMO solvent and to carry out the continuous processes.

Fourth, International Patent Application No. PCT/KR97/00104 (= WO-A-9747790) discloses the cellulose solution preparing process using a twin-screw extruder. A liquid NMMO solvent (having a melting point of 78 °C) at a temperature in the range of 90 °C to 100 °C is thrown into a first block of the twin-screw extruder, cooled in a second block at a temperature of 75 °C, added with a pulp powder having an apparent diameter in the range of 20 μm to 60 μm in a third block at a temperature of 75 °C, and heated to a temperature of 120 °C, while passing through the sections of the order of transfer, agitation, melting, solution homogenization, defoamation and constant discharging. It is, however, in this process, found that the swelling and dissolution of the pulp powder occur simultaneously during the transfer and agitation processes. In addition, the solvent throwing block and the pulp powder throwing block are different, such that the twin-screw extruder exhibits a low efficiency, resulting in the arrangement of at least 9-14 blocks (having a L/D 36-48). Furthermore, since the pulp powder has an apparent specific gravity in the range of 0.04 to 0.08, it is conveyed only in small amount, thereby resulting in a low productivity.

As stated above, the conventionally known processes have the disadvantages such as a low homogeneity of the produced cellulose solution, complicated processes and the like. To solve such the disadvantages, it is desirable that a liquid NMMO solvent is forced into the interior of the pulp at a fast rate and thus swells the pulp, while cellulose is not dissolved in the liquid NMMO solvent. At this time, it is preferable to minimize the dissolution of the cellulose by the liquid NMMO solvent and to maximize the swelling thereof by the liquid NMMO solvent.

## SUMMARY OF THE INVENTION

Accordingly, it is an object of the present invention to provide a process for preparing a homogeneous cellulose solution which is capable of producing a cellulose-NMMO mixture where a cellulose pulp powder is first swollen in a liquid NMMO solvent supercooled under a melting point by minimizing the dissolution of cellulose by the liquid NMMO solvent and maximizing the swelling thereof by the liquid NMMO solvent and then subjecting the thus-produced powder to a dissolution treatment, thereby producing a high homogeneous cellulose solution.

The liquid NMMO solvent is produced, for example, in such a manner that a large amount of water is removed out of 50 % or more by weight of NMMO water solution in a pressure reducing and distilling process and the resulting NMMO solution is concentrated. The production principle of the liquid NMMO solvent supercooled under a melting point from the concentrated NMMO solvent as a cellulose solvent has a close relation with thermal behaviors of the NMMO hydrate solvent, that is, the melting behaviors and isothermal and non-isothermal crystallization behaviors by cooling of the NMMO hydrate solvent.

[Table 1]

| Water Content (% by weight) | Heating and Cooling Rate (5 °C/min) Tm (°C) | | | | Tc (°C) | | | Heating and Cooling Rate (10°C/min) Tm (°C) | | | | Tc (°C) | | |
|---|---|---|---|---|---|---|---|---|---|---|---|---|---|---|
| 22 | 42 | | | | | | | 46 | | | | - | | |
| 18 | 42 | | 60 | | 5 | | | 45 | | 63 | | 5 below zero | | |
| 15 | 39 | | 77 | | 21 | | | 41 | | 78 | | 7 | | |
| 13.3 | 78 | | | | 25 | | | 80 | | | | 20 | | |
| 12 | 78 | - | 95 | 105 | 30 | - | 72 | - | 85 | 102 | - | 33 | 73 | - |
| 11 | 76 | 89 | 97 | 113 | 31 | - | 82 | - | 87 | 103 | 125 | 30 | 77 | 85 |
| 8 | 75 | 90 | 97 | 130 | 30 | 79 | 97 | 78 | 90 | 103 | 135 | 30 | 78 | 99 |
| 6 | 75 | 90 | 95 | 141 | 27 | 80 | 113 | 77 | 92 | 103 | 148 | 27 | 79 | 118 |
| 3 | 74 | 90 | 99 | 156 | - | 80 | 127 | 77 | 93 | 104 | 177 | - | 80 | 139 |
| 0 | [74] | - | 103 | 180 | - | 80 | 140 | [75] | - | 105 | 183 | - | 81 | 143 |

Tm : melting point (observed by heating from 0 °C)

Tc: crystallization temperature (observed by cooling from a maximum melting temperature to 20 °C below zero).

[ ] : slight thermogram

Table 1 shows the thermal behaviors of the NMMO hydrate produced by subjecting 50% by weight of NMMO water solution made by BASF Co. to pressure reduction and distillation and concentration (An accurate water content in the NMMO hydrate was measured by using a Karl-Fischer method, and the melting behaviors and isothermal and non-isothermal crystallization behaviors were obtained by sealing a sample in amount of 25 mg to 35 mg in a stainless steel capsule for a liquid sample (Perkin-Elmer part 319-0218) and heating and cooling at a temperature per minute in the range of 2 °C to 200 °C at a nitrogen atmosphere, using DSC 7 (which is a trade name and made by Perkin-Elmer Co.).

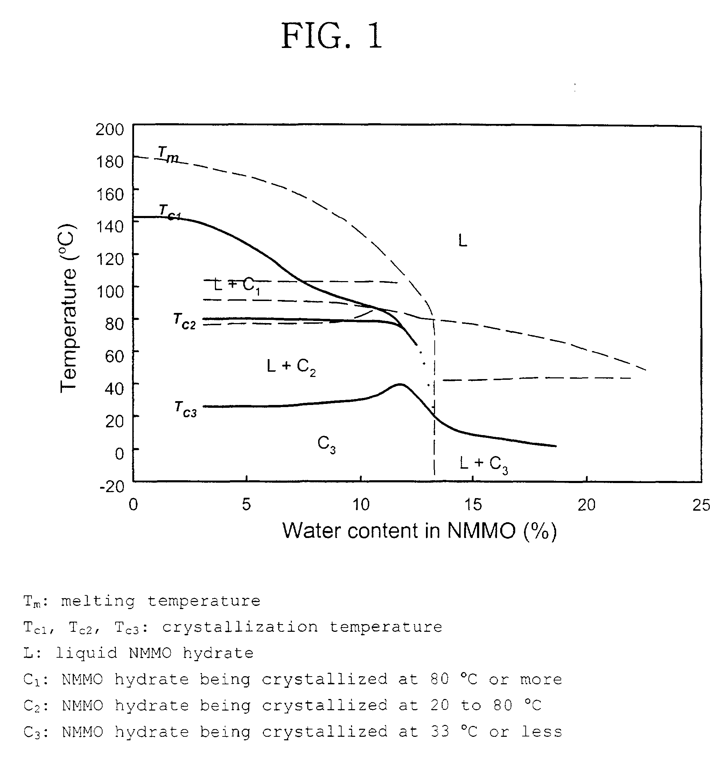

According to Table 1, on the basis of the NMMO hydrate having a water content of 13.3 % by weight(hereinafter, referred to as NMMO monohydrate), if the heating and cooling rate is increased from 5 °C to 10 °C per minute for the NMMO hydrate having a larger water content of 15 % to 22 % by weight, the value of melting point is increased and the crystallization temperature is decreased. This generally appears depending upon the heating and cooling rate upon the measurement of the DSC. However, if the heating and cooling rate is increased from 5 °C to 10 °C per minute for the NMMO hydrate having a smaller water content of 0 % to 12 % by weight, the value of melting point is increased and the crystallization temperature is also increased. When the NMMO hydrate solvent is made by the concentration, the NMMO monohydrate has a crystal transition to anhydrous NMMO in accordance with the reduction of the water content, thereby giving an affect on the thermal characteristic. The anhydrous NMMO is produced by sublimation of the NMMO monohydrate, and at this process, the NMMO monohydrate having the melting point of 78 °C exhibits the crystal transition to the anhydrous NMMO. This appears at the NMMO hydrate having a water content smaller than 13.3 % by weight, and specifically, the NMMO hydrate having a water content in the range of 13.3 % by weight to 11 % by weight exhibits slightly different thermal characteristics due to instable crystal transition properties. The characteristics shown in Table 1 are more apparent from Fig. 1. Fig. 1 is a graph illustrating the melting and crystallization temperatures according to the water content in the NMMO hydrate, which is heated and cooled at a temperature 10 °C per minute. The dotted line denotes the melting point $T_m$ of the NMMO hydrate according to melting and the solid line denotes the crystallization temperatures $T_{c1}$-$T_{c3}$ according to the cooling. In this case, different melting points and crystallization temperatures are obtained depending upon the water content in the NMMO hydrate. The symbol 'L' represents the liquid region of the NMMO hydrate, and the symbols '$C_1$, $C_2$ and $C_3$' represent the crystalline regions divided from the crystallization temperature appearing when the melted NMMO hydrate is cooled. If the NMMO hydrate having a water content in the range of 13.3 % by weight to 22 % by weight is melted and then cooled, the crystallization in the NMMO hydrate occurs at the region $C_3$ at a temperature in the range of 0 °C to 20 °C. The NMMO monohydrate having the water content of 13.3 % by weight has the melting point of 80 °C at a heating rate per minute of 10 °C, and if it is fully melted and then cooled at a cooling rate per minute of 10 °C, the crystallization in the NMMO hydrate occurs at the region $C_3$ at a temperature of 20 °C. In case of the NMMO hydrate having a water content of 8 % by weight, the crystallization in the NMMO hydrate occurs at the region $C_1$ at a temperature of 80 °C or more, at the region $C_2$ at a temperature in the range of 20 °C to 80 °C, and at the region $C_3$ at a temperature of 33 °C or less. If the NMMO hydrate having a water content in the range of 13.3 % or less by weight to 3 % by weight is heated, different melting points appear according to the water content from the temperature of 80 °C, as shown in Table 1. If the NMMO hydrate is heated to a temperature where it is fully melted and then cooled, different crystallization peaks appear according to the water content thereof. In case of the cooling rate per minute of 10 °C, a first crystallization on the NMMO hydrate occurs at a temperature in the range of 85 °C to 143 °C (the region $C_1$ in Fig. 1), and if the cooling treatment is continuously carried out, a second crystallization of the liquid NMMO hydrate which has not been crystallized in the region $C_1$ occurs at a temperature in the range of 73 °C to 81 °C (the region $C_2$ in Fig. 1) and a third crystallization occurs at a temperature in the range of 27 °C to 33 °C (the region $C_3$ in Fig. 1).

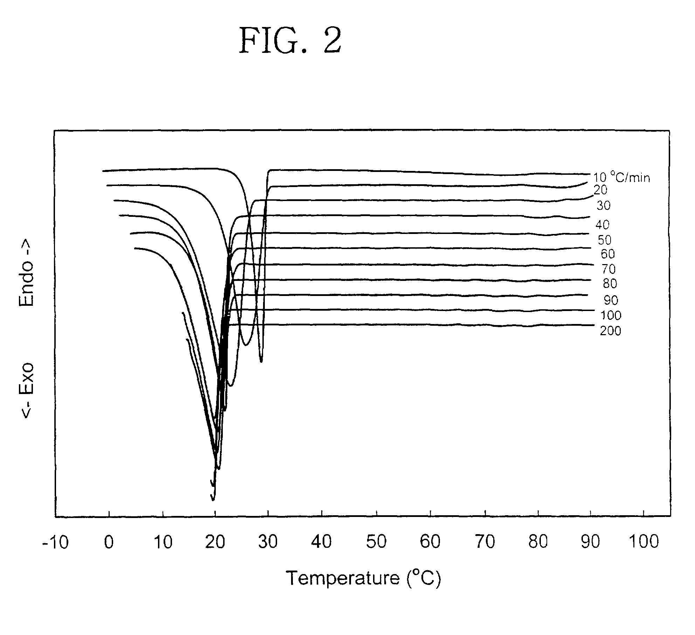

When the NMMO hydrate is heated and melted over the melting point and then cooled, it maintains the liquid state during a predetermined time until its crystallization occurs. The liquid maintaining time is different, based upon the cooling rate of the melted NMMO hydrate. Fig. 2 is a graph illustrating non-isothermal crystallization behaviors when the NMMO monohydrate having a water content of 13. 3 % by weight is cooled at a cooling rate per minute in the range of 10 °C to 200 °C at the melted state of 90 °C, by using the DSC.

[Table 2]

| Non-isothermal Crystallization Behaviors of NMMO Hydrate | | | | |
|---|---|---|---|---|
| Cooling rate (°C/min) | 86.7% by weight of NMMO | 92% by weight of NMMO | | |
| | Tc (°C) | Tc (°C) | | |
| 10 | 29 | 30 | 78 | 99 |
| 20 | 26 | 28 | 78 | 95 |
| 30 | 24 | 25 | | 83 |
| 40 | 22 | 23 | | 78 |
| 50 | 22 | 22 | | 75 |
| 60 | 20 | 22 | | |
| 70 | 20 | 21 | | |
| 80 | 20 | 20 | | |

[Table 2] (continued)

| Non-isothermal Crystallization Behaviors of NMMO Hydrate | | |
|---|---|---|
| Cooling rate (°C/min) | 86.7% by weight of NMMO | 92% by weight of NMMO |
| | Tc (°C) | Tc (°C) |
| 90 | 20 | 20 |
| 100 | 20 | 19 |
| 200 | 20 | 17 |
| Tc : crystallization temperature<br>(86.7 % by weight of NMMO: observed by cooling from 95 °C to 20 °C below zero)<br>(92 % by weight of NMMO: observed by cooling from 135 °C to 20 °C below zero) | | |

Table 2 shows the crystallization temperatures according to the variation of cooling rate for respective melted NMMO hydrate solvents having the water contents of 13.3 % by weight and 8 % by weight. In case of the cooling rate per minute in the range of 10 °C to 200 °C, the NMMO monohydrate has the crystallization temperature in the range of 29 °C to 20 °C. That is, in case of the cooling rate per minute of 10 °C, the NMMO monohydrate has the crystallization temperature difference value of 9 °C when compared to that (the crystallization temperature of 20 °C) in Table 1. This is because of the difference between the thermal history appearing at the time when heating maximum temperatures for obtaining the melted material are 95 °C (see Table 2) and 80 °C (see Table 1). On the other hand, if the NMMO hydrate having a water content of 8 % by weight is heated to a temperature of 135 °C and then cooled, increase of a cooling rate per minute in the range of 10 °C to 200 °C resulted in decrease of the crystallization temperature. Unlike the NMMO monohydrate, the NMMO hydrate having the water content of 8 % by weight exhibits the crystallization at temperatures of 30 °C, 78 °C and 99 °C, respectively, at the cooling rate per minute of 10 °C. As the cooling rate is increased, the crystallization temperature becomes gradually low, and at the cooling rate per minute of 60 °C or more, the crystallization occurring at the temperatures of 78 °C and 99 °C disappears, such that only a single non-isothermal crystallization temperature is observed. This is because the crystallization of the NMMO hydrate does not occur at the temperatures of 78 °C and 99 °C and uniformly occurs at a low temperature of 22 °C or less, if the cooling rate per minute is increased to 60 °C or more. Therefore, in case of the NMMO hydrate having the water content of 8 % by weight, if it is fully heated over the melting point and rapidly cooled at a cooling rate per minute of 60 °C or more, the liquid NMMO solvent supercooled even at a temperature of 22 °C or less can be produced.

The liquid maintaining time of the NMMO solvent supercooled at a predetermined temperature can be observed from the isothermal crystallization behaviors where the NMMO hydrate is heated over the melting point or more and then rapidly cooled to a predetermined temperature. Table 3 shows the liquid maintaining time of the NMMO monohydrate (having a melting point of 78 °C) and melted at a temperature of 95 °C from a temperature where the NMMO monohydrate is cooled at cooling rate per minute of 20 °C and 200 °C, respectively to predetermined temperatures, to the time before the crystallization of the NMMO monohydrate occurs. In case of the cooling rate per minute of 20 °C, when predetermined supercooling temperatures are 30 °C, 35 °C, 37.5 °C, 38.5 °C, 40 °C and 45 °C under the melting point, the liquid maintaining time is 2 seconds, 10 seconds, 15 seconds, 27 seconds, 38 seconds and or more, respectively. In case of the cooling rate per minute of 220 °C, at the same supercooling temperatures as those in the above, the liquid maintaining time is 12 seconds, 48 seconds, 55 seconds, 217 seconds, 1800 seconds and or more, respectively. Specifically, in case of the cooling rate per minute of 200 °C, if the supercooling temperatures are maintained at 45 °C, 50 °C and 65 °C, the liquid state is kept even over 1800 seconds, such that no exothermic peak indicating the crystallization exhibits for several hours at the above temperatures on the DSC.

[Table 3]

| Isothermal Crystallization Behaviors of NMMO Hydrate | | |
|---|---|---|
| Supercooled Maintaining Temperature (°C) | Crystallization Time (second) | |
| | Cooling Rate (20 °C/min) | Cooling Rate (200 °C/min) |
| 30 | 2 | 12 |
| 35 | 10 | 48 |

EP 1 191 038 B1

[Table 3]   (continued)

| Isothermal Crystallization Behaviors of NMMO Hydrate | | |
|---|---|---|
| Supercooled Maintaining Temperature (°C) | Crystallization Time (second) | |
| | Cooling Rate (20 °C/min) | Cooling Rate (200 °C/min) |
| 37.5 | 15 | 55 |
| 38.5 | 27 | 217 |
| 40 | 38 | 1800 seconds or more |
| 45 | 38 seconds or more | " |
| 50 | " | " |
| 65 | " | " |
| NMMO monohydrate (having water content of 13.3 % by weight and melting point of 78 °C) Crystallization time: the liquid maintaining time at a supercooling maintaining temperature after the liquid melted material of 95 °C is cooled at respective cooling rate to the supercooling maintaining temperature. | | |

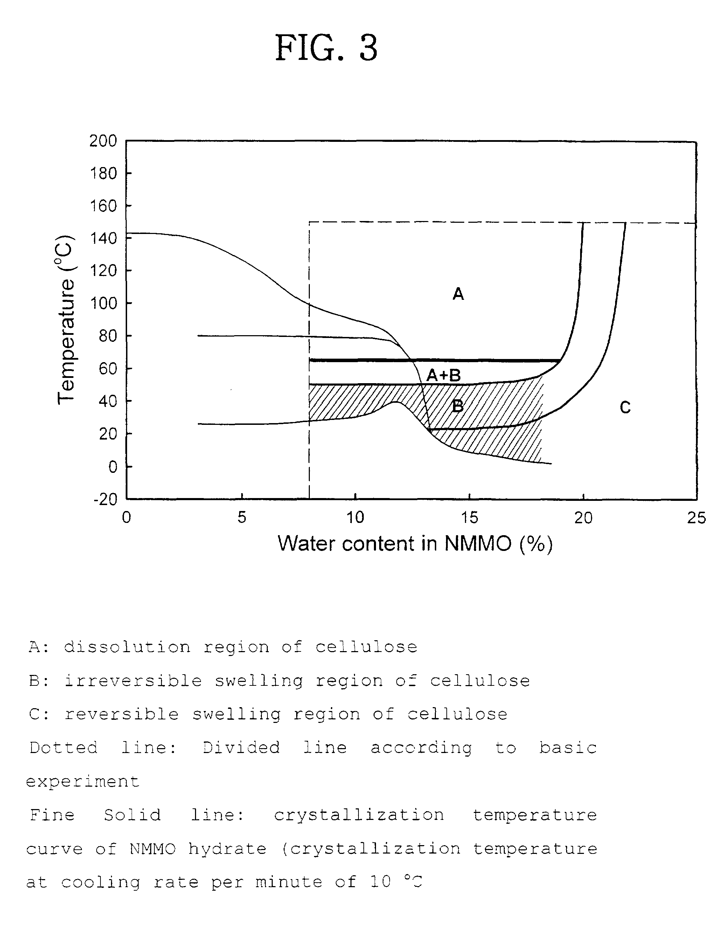

Fig. 3 is a graph illustrating partly phase change behaviors of the cellulose on the supercooled liquid region of the NMMO hydrate solvent, based upon the basic experiments as will be discussed below. At a temperature of 65 °C or more where the NMMO hydrate is supercooled and maintained in the liquid state, the region 'A' where the cellulose is dissolved is formed; at a temperature in the range of 50 °C to 65 °C, the region 'A+B' where the cellulose is dissolved and swollen in a irreversible manner is formed; and at a temperature of 50 °C or less, the region 'B' where the cellulose is swollen in a irreversible manner and the region 'C' where the cellulose is reversibly swollen are formed. Since a gel film is formed on a pulp powder surface on the cellulose dissolution region (the region 'A'), it is difficult to produce a homogeneous solution or even if the solution is produced, there are needs for a strong shearing force and time consumption. On the region (the region 'A+B') where the dissolution and irreversible swelling of the cellulose co-exist, it is possible to produce the solution in an easier manner than that in the cellulose dissolution region, but there is a need for a predetermined shearing force, which may result in the decomposition of the solution. On the region (the region 'B') where the irreversible swelling of the cellulose occurs, the cellulose is not dissolved, but swollen, such that the productivity of the pulp powder swollen can be high due to the consumption of a minimum shearing force and a shortest time. The resulting cellulose NMMO solution becomes a high homogenous solution where the decomposition thereof is reduced at a minimum. On the region (the region 'C') where the reversible swelling of the cellulose occurs, the water content of the NMMO is high and thus, a degree of dissolution of the cellulose becomes low, thereby making it difficult to produce the cellulose solution having a high concentration. However, if the cellulose is swollen and heated even on the hatched portion on the region 'C' as the reversible swelling region, the cellulose solution can be produced.

As can be appreciated from the above, in the thermal behaviors of the NMMO hydrate having a water content in the range of 8 % by weight to 18 % by weight that is produced by concentrating 50 % by weight of aqueous NMMO solution, if the NMMO hydrate is melted and then rapidly cooled to a predetermined temperature, it is kept at a supercooled liquid state during a substantially long time period even at a temperature under a melting point thereof, such that the liquid NMMO hydrate is forced into the interior of pulp powder and thus serves to swell the cellulose, while minimizing the dissolution of the cellulose.

Based upon the above-discussed contents, therefore, according to the features of the present invention, the NMMO hydrate solvent having a water content in the range of 8 % by weight to 18 % by weight, preferably the NMMO hydrate solvent having a water content in the range of 8 % by weight to 14 % by weight is melted and then supercooled to a low temperature liquid under a melting point thereof and on the region where the dissolution and swelling of the cellulose co-exist, preferably on the region where the swelling of the cellulose exists, the dissolution of the cellulose becomes minimized and the swelling thereof becomes maximized, such that the supercooled liquid NMMO solvent is easily diffused and forced to the interior of pulp powder, thereby producing the swollen mixture and hence, the resulting mixture is heated and dissolved, thereby finally producing a high homogeneous cellulose solution.

To accomplish this and other objects of the present invention, there is provided a process for preparing a homogeneous cellulose solution by using a liquid NMMO hydrate solvent, which comprises the steps of: subjecting the liquid NMMO hydrate solvent melted to a fast cooling to make it supercooled under a melting point; and mixing the supercooled liquid NMMO hydrate solvent with a cellulose pulp powder and swelling the resulting mixture.

6

BRIEF DESCRIPTION OF THE DRAWINGS

Fig. 1 is a graph illustrating thermal behaviors (heating and cooling rate 10 °C/min) of the NMMO hydrate;

Fig. 2 is a graph illustrating non-isothermal crystallization behaviors (cooling at the melting state of 95 °C) according to cooling rate of the NMMO monohydrate (having a water content of 13.3 % by weight);

Fig. 3 is a graph illustrating partly phase change behaviors of the cellulose;

Fig. 4 is a block diagram illustrating a process of preparing the homogeneous cellulose solution;

Fig. 5 is a schematic view illustrating the main parts of a first machine (cooling air injection type at a center) for the preparation of liquid NMMO supercooled under a melting point;

Fig. 6 is a schematic view illustrating the main parts of a second machine (cooling air injection type at the outside) for the preparation of liquid NMMO supercooled under a melting point; and

Fig. 7 is a schematic view illustrating twin-screw variable pitch screw supplier for compressing and supplying a pulp powder.

DETAILED DESCRIPTION OF THE PREFERRED EMBODIMENTS

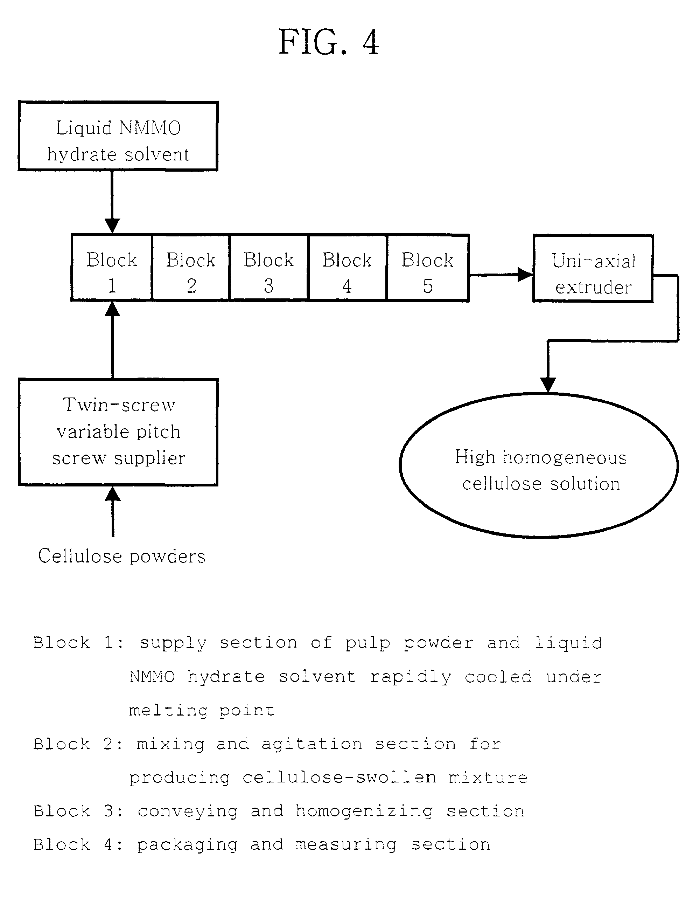

An explanation of the process of preparing a high homogeneous cellulose solution according to the present invention will be in detail discussed with reference to Figs. 4 to 7.

Fig. 4 shows a process of preparing the high homogeneous cellulose solution according to the present invention. As shown, a twin-screw swollen-mixture producing machine (which is composed of at least five blocks) has the similar structure and function to a twin-screw extruder and treats the NMMO hydrate solvent and pulp powder in the order of mixing, agitation and conveying, thereby producing the swollen mixture. The cellulose swollen mixture is continuously thrown into a uni-axial extruder, thereby producing the high homogeneous cellulose solution.

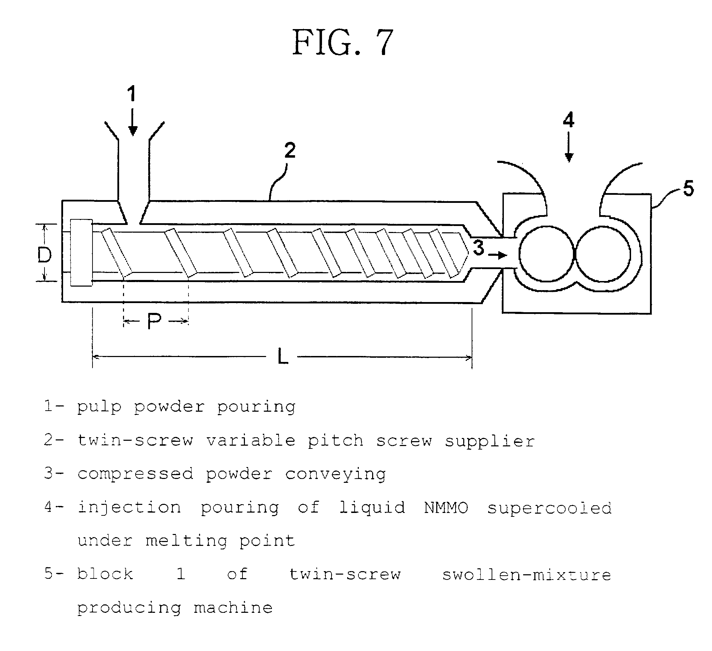

The supercooled liquid NMMO hydrate solvent is injected at a predetermined rate to the top end of a first block of the twin-screw swollen-mixture producing machine (having a diameter of 60 mm and L/D of 20). The pulp powder is compressed, as shown in Fig. 7, at a twin-screw variable pitch screw supplier (having a diameter of 45 mm, L/D of 7 and an initial P/D of 1.5) whose pitch interval 'P' is decreased in a convey advancing direction and as a result, its apparent specific gravity is adjusted. Then, the pulp powder having the adjusted apparent specific gravity is supplied to the side of the first block of the twin-screw swollen-mixture producing machine. On the top end of the first block of the twin-screw swollen-mixture producing machine, the supercooled liquid NMMO hydrate solvent is injected and mixed with the pulp powder whose apparent specific gravity is adjusted, on second and third blocks thereof the swelling and mixing of the mixture occur, on a third block thereof the homogeneity and conveying thereof occur and on a fifth block thereof the packaging and measuring thereof occur. The temperature of the entire sections of the twin-screw swollen-mixture producing machine is preferably 65 °C at a room temperature, more preferably 50 °C at a room temperature, further preferably 45 °C at a room temperature, in order to form the conditions of the region (the region 'A+B') where the dissolution and swelling of the cellulose co-exist, preferably the conditions of the region (the region 'B') where the swelling of the cellulose occurs.

When compared with a general twin-screw extruder used for producing the homogeneous cellulose solution having the L/D in the range of 35 to 48 or more, the twin-screw swollen-mixture producing machine used in the present invention has an extremely smaller L/D, but exhibits the productivity of about 10 times that of the twin-screw extruder having the same diameter. Therefore, the twin-screw swollen-mixture producing machine used in the present invention has desirably the L/D in the range of 15 to 35, more desirably in the range of 15 to 25 from the viewpoint of the productivity and homogeneity. The swollen mixture which has passed through the twin-screw swollen-mixture producing machine is packaged or continuously conveyed to the single-screw extruder used generally and then dissolved, thereby being converted into the cellulose solution for producing a cellulose fiber or film.

The NMMO hydrate solvent used for swelling the cellulose pulp powder has a water content of desirably in the range 8 % to 18 %, more desirably in the range of 8 % to 14 %. This is produced by subjecting 50 % by weight of the NMMO water solution to a pressure-reducing and distilling treatment, thereby removing a large amount of water, which is a composition having a water content capable of dissolving the cellulose. The NMMO hydrate solvent is heated and melted and then, rapidly cooled desirably under 65 °C, more desirably 50 °C, which becomes supercooled to a low temperature liquid.

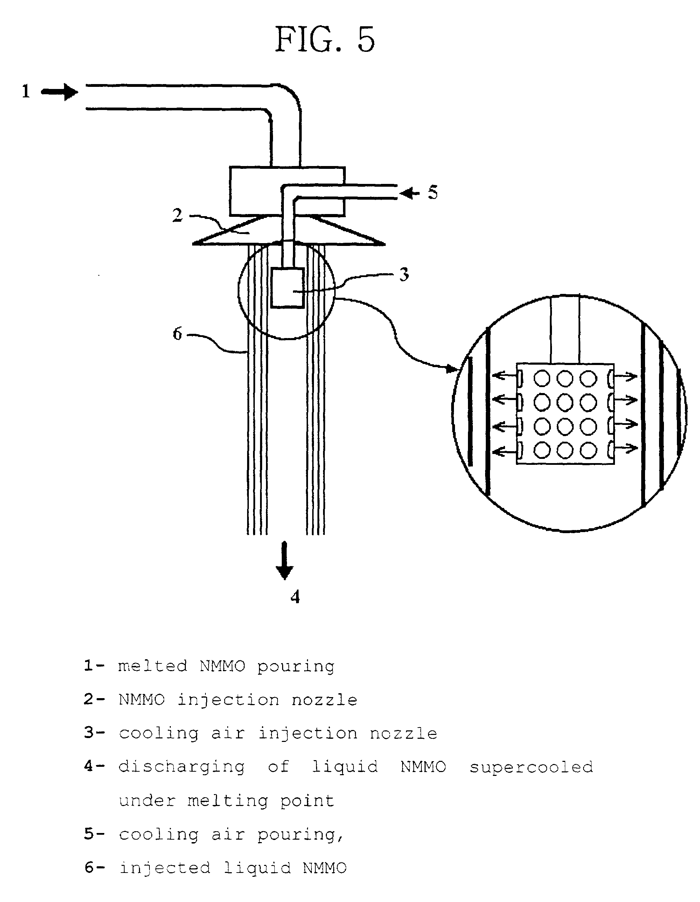

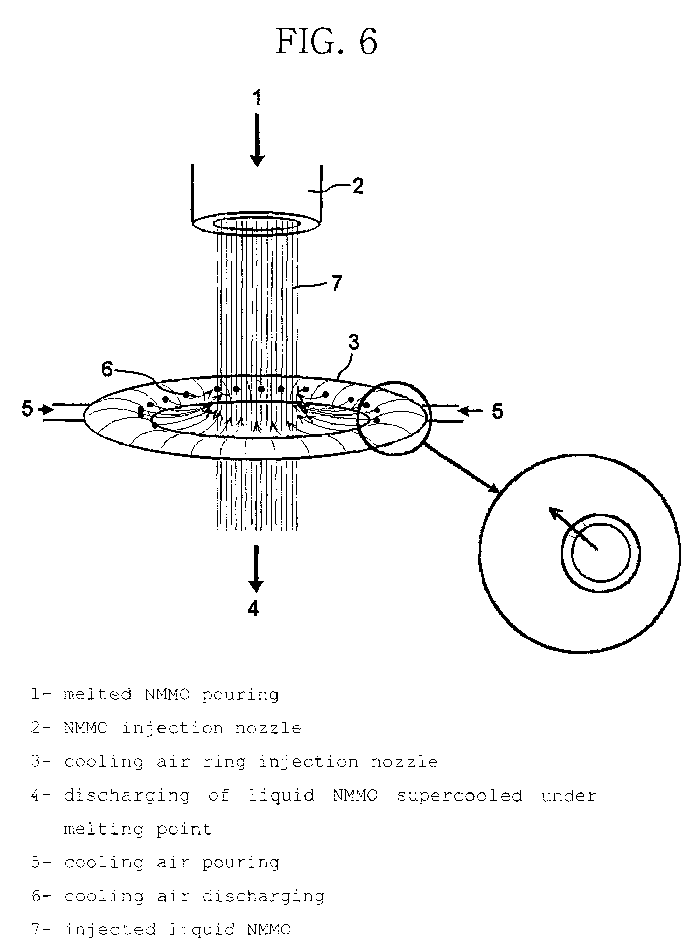

There are several methods for supercooling the melted NMMO hydrate solvent, parts of which are shown in Figs. 5 and 6 in order to understand the concept of producing the supercooled liquid NMMO hydrate solvent.

In Fig. 5, the cooling air is injected at the injection stream center of the NMMO hydrate solvent, and in Fig. 6, injected at the injection stream outside thereof.

Also, the liquid maintaining time of the supercooled NMMO solvent is different depending upon the water content and the cooling rate, as noted in the above.

The NMMO hydrate solvent having a water content of 13 % or less by weight has various melting points (refer to Table 1 and Fig. 1), but if it is melted and then rapidly cooled at a cooling rate per minute of 60 °C, no crystallization occurs at the $T_{c1}$ and $T_{c2}$ (see Fig. 1). In this case, the crystallization occurs at a temperature of about 25 °C, thereby producing the liquid NMMO supercooled to the temperature of 50 °C or less at which the dissolution of the cellulose is minimized and the swelling thereof is maximized.

If the NMMO hydrate solvent having a water content of 13 % or more by weight is rapidly cooled at a cooling rate per minute of 20 °C or more, the crystallization occurs at a temperature of about 30 °C, thereby producing the liquid NMMO supercooled to the temperature of 50 °C or less at which the dissolution of the cellulose is minimized and the swelling thereof is maximized. Therefore, after the NMMO hydrate solvent is completely melted, in order to produce the liquid NMMO solvent supercooled to desirably a temperature of 65 °C or less, more desirably a temperature of 50 °C or less, the rapid cooling rate should be set preferably at the cooling rate per minute of 20 °C or more (in case of the NMMO hydrate solvent having a water content of 13 % or more by weight), more preferably at the cooling rate per minute of 60 °C or more (in case of the NMMO hydrate solvent having a water content of 13 % or less by weight) and then, the supercooled liquid NMMO solvent is thrown into the first block of the twin-screw swollen-mixture producing machine.

As discussed above, if the NMMO hydrate solvent is heated over the melting point or more and then supercooled to a temperature under the melting point, it maintains its liquid state during a predetermined time period. The supercooled liquid maintaining time is dependent upon the temperature of the pulp powder thrown into the side of the first block of the twin-screw swollen-mixture producing machine. In order to reduce an amount of a dried cooling airflow used for rapidly cooling the NMMO hydrate solvent, it is desirable that the temperature of the pulp powder is set as low as possible. Hence, the temperature of the pulp powder is kept preferably at a temperature range of a room temperature to 50 °C, more preferably a temperature range of a room temperature to 40 °C.

The cellulose used in the process of the present invention uses the pulp powder produced by milling a normal pulp sheet by a knife-edged blade mill on which a ring sieve is mounted. The apparent specific gravity of the normal pulp sheet is 0.8, and if the normal pulp is powdered, the average diameter and apparent specific gravity of the powder are different depending upon the type of a tree. For instance, even if the condition of the milling is the same, the average diameter and apparent specific gravity of the normal pulp powder of a needle-leaf tree are 50 μm and 0.08, and the average diameter and apparent specific gravity of the normal pulp powder of a broadleaf tree are 16 μm and 0.05.

If the diameter of the pulp powder is larger than 1000 μm, the forcing of the NMMO hydrate solvent into the interior of the pulp powder, without any dissolution of the cellulose, consumes much time. It is, therefore, desirable that the diameter of the pulp powder is 1000 μm or less. In correspondence with the diameter of the pulp powder, if the apparent specific gravity of the pulp powder is under 0.05, the diameter of pulp is extremely small, such that it is liable to be exploded and the volume is greatly large, such that the conveying efficiency becomes low. Therefore, in order to enhance the conveying efficiency with the increment of the apparent specific gravity of the pulp powder, there should be provided the twin-screw variable pitch screw supplier for compressing and conveying the pulp powder, as shown in Fig. 7. If the pulp powder having the apparent specific gravity of 0.05 is compressed over 0.5, there is a possibility that the supercooled liquid NMMO hydrate solvent is not well forced into the interior of the pulp powder. Therefore, it is desirable that the apparent specific gravity of the pulp powder is compressed desirably in the range of 0.1 to 0.5 or less, more desirably in the range of 0.1 to 0.4.

The present invention will be more in detail discussed by basic experiments, preliminary experiments and preferred embodiments. The characteristics of the swollen mixture and the cellulose solution produced in the embodiments are evaluated as follows:

1. Cellulose Structure Analysis

The cellulose pulp powder used has a cellulose I structure. If the pulp powder is dissolved and swollen in a irreversible manner in the NMMO hydrate solvent, it is changed from the cellulose I structure to a cellulose II structure. To check this structure change, the cellulose was collected from the swollen mixture and the dissolved solution that were passed through the twin-screw swollen-mixture producing machine and the single-screw extruder connected thereto, and X-ray irradiation on the collected cellulose was then carried out. An apparatus for the X-ray irradiation was employed with 'MX18 X-ray Diffractometer made by MAC science Co. Under the measuring conditions of 45 kV and 250 mA, the cellulose was subjected to scanning per minute of 1 ° with CuK $\alpha$-ray ($\lambda$=1.5405) that was passed through a nickel filter, thereby obtaining a diffraction pattern.

2. weight-average degree of polymerization (DPw) of Cellulose

The variation of molecular weight of the cellulose caused due to the dissolution of cellulose upon the production of the solution was measured as follows: The intrinsic viscosity of the cellulose was measured at a concentration in the range of 0.1 g/dl to 0.6 g/dl at a temperature of 25 ± 0.01 °C by using a Ubbelohode viscometer No. 1(made by Fisher Corporation) and 0.5 M Cuene (Cupriethylenedeamine) solution produced according to ASTM D539-51T. The intrinsic viscosity [IV] of the sample was calculated from the concentration 'C' and specific viscosity '$\eta_{sp}$', based upon the following equation (1). The weight-average degree of polymerization 'DPw' was calculated from the obtained specific viscosity [IV], based upon a Mark-Houwink equation as given by the following equation (2) (refer for example to M. Marx, Makromol. Chem., 16, 157(1995); J. Brandrup, E.H. Immergut, Polymer Handbook, 3rd ed., Vol. 144, Wiley-Interscience, New York, 1989).

$$[IV] \; = \; \lim_{C \to 0} \; [\eta_{sp}/C] \qquad\qquad ...... \;\; (1)$$

$$[IV] = 0.98 \times 10^{-2} \; DPw^{0.9} \qquad\qquad (2)$$

3. Concentration of Color Impurity

The discoloration of the NMMO solvent caused upon production of the cellulose solution was measured by 30 % by weight of NMMO water solution. 10 g of Cellulose solution in NMMO was immersed into distilled water for 60 minutes. The coloring impurity contained in the NMMO solution was measured at a light absorption density of 450 nm by using a ultraviolet visibility spectral analyzer (which has a trade name, Hewlett Packard Model HP8453). Its result was indicated as amine oxide optical density (AOOD), which means the light absorption density of 1 % by weight of NMMO solution at 450 nm. The AOOD of the 50 % by weight of NMMO water solution (BASF Co.) was 0.0006.

4. Homogeneity of Cellulose Solution

The homogeneity of the cellulose solution obtained by dissolving the swollen powder produced in the cellulose swollen-mixture producing machine by the single-screw extruder was evaluated in accordance with as to whether the cellulose particles exist or not. The temperature distribution of the single-screw extruder (having a diameter of 120 mm and L/D of 30) was set as a solid phase moving region of 60 °C, a dissolution region of 90 °C, a dissolution moving region of 100 °C and a die region of 100 °C. The safety limit pressure of the front end of the release region of the single-screw extruder was set as the air pressure of 70, and the number of rotation per minute of the screw was 150. At this time, the cellulose particles that were not been dissolved were observed and evaluated by a Nikon polarizing microscope, Type 104.

Basic Experiment: Swelling and Dissolution Behaviors of Cellulose

The contact test of the pulp powder and the liquid NMMO hydrate solvent supercooled solution was carried out to obtain the data for the partly phase variation of the cellulose, as shown in Fig. 3 and to find the region where the cellulose was not dissolved but swollen by the liquid NMMO hydrate solvent supercooled under its melting point, by the Nikon polarizing microscope, Type 104 on which a hot stage (Mettler Toledo FP900) was attached. If the melted NMMO hydrate was supercooled to a temperature under its melting point, it was kept at the liquid state until its crystallization occurred. During the liquid maintaining time, the pulp powder was swollen by the liquid NMMO solvent. The swelling and dissolution behaviors of the cellulose by the NMMO hydrate were exhibited depending upon the water contents of the NMMO hydrate. The dissolution and swelling behaviors of the cellulose at a temperature of the melting point or more of the NMMO hydrate were reported by conventional known processes (refer for example to U.S. Patent No. 4,196,282, H. Chanzy, et al., J, Appl. Polym. Sci.; Appl. Polym. Symp., 37, 239 (1983).

However, the basic experiments of the present invention were carried out for the swelling behaviors of the cellulose by the NMMO hydrate under the supercooled conditions where the NMMO hydrate was not crystallized and existed at a liquid state. The dissolved and swollen cellulose by the NMMO hydrate was divided into three regions, as shown in Fig. 3. The region 'A' was the cellulose dissolution region, the region 'B' was the irreversible cellulose swollen region, and the region 'C' was the reversible cellulose swollen region. In case of the cellulose on the dissolution and irreversibly swollen regions from which the NMMO solvent was removed, the cellulose had the cellulose II structure, but in case of the cellulose on the reversibly swollen region from which the NMMO solvent was removed, the cellulose was changed to the initial cellulose I structure. On the basic experiments, respective cellulose structures were checked by the X-ray diffraction analysis.

<Basic Experiment 1>

NMMO hydrate solvents having water contents of 13 %, 17 % and 20 % by weight were heated and melted to their melting points, rapidly cooled to a cooling rate per minute of 20 °C and then kept at a temperature of 30 °C. Next, a cellulose pulp powder (Sai-Lyo, Sappi, DPw 1050) having a room temperature in the range of 20 °C to 25 °C was thrown into the respective NMMO solvents. It was found that while the pulp powder was met with the respective liquid NMMO hydrate solvents and expanded, the liquid NMMO hydrate solvent having the water content of 13 % by weight became first crystallized, such that further swelling of the pulp powder did not occur. It was, on the other hand, found that the liquid NMMO hydrate solvents having the water contents of 17 % by weight and 20 % by weight became somewhat swollen and crystallized after elapsing of about 15 seconds.

<Basic Experiment 2>

A pulp powder preheated to a temperature of 30 °C was thrown into the respective supercooled liquid NMMO solvents kept at the temperature of 30 °C that were the same as Basic experiment 1. It was found that the expansion degree of the preheated pulp powder was higher than that of the pulp powder in Basic experiment 1 and the NMMO solvents became crystallized after elapsing of about 30 seconds.

<Basic Experiment 3>

NMMO hydrate solvents having water contents of 8 %, 10.5 %, 13 %, 17 % and 19 % by weight were heated and melted to their melting points, rapidly cooled to a cooling rate per minute of 20 °C and then kept at a temperature of 40 °C. Next, a cellulose pulp powder having a room temperature was thrown into the respective liquid NMMO hydrate solvents. It was found that while the pulp powder was met with the respective liquid NMMO hydrate solvents and expanded, the respective liquid NMMO hydrate solvents became crystallized within about 20 seconds and further swelling of the pulp powder did not occur.

<Basic Experiment 4>

A pulp powder preheated to a temperature of 40 °C was thrown into the respective supercooled liquid NMMO solvents kept at the temperature of 30 °C that were the same as Basic experiment 3. It was found that the expansion degree of the preheated pulp powder was higher than that of the pulp powder in Basic experiment 3 and the NMMO solvents became crystallized after elapsing of about 35 seconds.

<Basic Experiment 5>

NMMO hydrate solvents having water contents of 8 %, 10.5 %, 13 %, 17 % and 19 % by weight were heated and melted to their melting points, rapidly cooled to a cooling rate per minute of 200 °C and then kept at a temperature of 40 °C. Next, a cellulose pulp powder having a room temperature was thrown into the respective liquid NMMO hydrate solvents. It was found that while the pulp powder was met with the respective liquid NMMO hydrate solvents and expanded, the respective liquid NMMO hydrate solvents did not become crystallized until about 300 seconds and the pulp powder was substantially swollen.

<Basic Experiment 6>

A pulp powder preheated to a temperature of 40 °C was thrown into the respective supercooled liquid NMMO solvents kept at the temperature of 40 °C that were the same as Basic experiment 5. It was found that the expansion degree of the preheated pulp powder was similar to that of the pulp powder in Basic experiment 5.

<Basic Experiment 7>

NMMO hydrate solvents having water contents of 8 %, 10.5 %, 13 %, 17 %, 19 % and 21 % by weight were heated and melted to their melting points, rapidly cooled to a cooling rate per minute of 200 °C and then kept at a temperature of 50 °C. Next, a cellulose pulp powder having a room temperature was thrown into the respective liquid NMMO hydrate solvents. It was found that while the expansion degree of the preheated pulp powder was higher to that of the pulp powder in Basic experiment 6 and the respective liquid NMMO hydrate solvents are kept at their liquid states for 1800 seconds or more.

<Basic Experiment 8>

A pulp powder preheated to a temperature of 50 °C was thrown into the respective supercooled liquid NMMO solvents kept at the temperature of 50 °C that were the same as Basic experiment 7. It was found that the expansion degree of the preheated pulp powder was higher than that of the pulp powder in Basic experiment 7, a part of the pulp powder was dissolved and the respective liquid NMMO hydrate solvents are kept at their liquid states for 1800 seconds or more.

<Basic Experiment 9>

NMMO hydrate solvents having water contents of 10.5 %, 13 %, 17 %, 19 % and 21 % by weight were heated and melted to their melting points, rapidly cooled to a cooling rate per minute of 20 °C and then kept at a temperature of 65 °C. Next, a cellulose pulp powder having a room temperature was thrown into the respective liquid NMMO hydrate solvents. It was found that the pulp powder was swollen and dissolved in the liquid NMMO hydrate solvents having the water contents of 10.5 %, 13 % and 17 % by weight, the swollen pulp powder surface was somewhat dissolved in the liquid NMMO hydrate solvent having the water content of 19 % by weight, and the pulp powder was only swollen in the liquid NMMO hydrate solvent having the water content of 21 % by weight.

<Basic Experiment 10>

NMMO hydrate solvents having water contents of 10.5 %, 13 %, 17 %, 19 % and 21 % by weight were heated and melted to their melting points, rapidly cooled to a cooling rate per minute of 20 °C and then kept at a temperature of 65 °C. Next, a cellulose pulp powder having a room temperature was thrown into the respective liquid NMMO hydrate solvents. The cellulose pulp powder was thrown at the temperature of 65 °C in the same process as in Basic experiment 9 and after swelling, heated to a temperature of 95 °C. It was found that the pulp powder was swollen and fully dissolved at the temperature of 95 °C in the liquid NMMO hydrate solvents having the water contents of 10.5 %, 13 %, 17 % and 19 % by weight and the pulp powder was only swollen, without any dissolving process, in the liquid NMMO hydrate solvent having the water content of 21 % by weight.

<Basic Experiment 11>

NMMO hydrate solvents having water contents of 10.5 %, 13 %, 17 %, 19 % and 21 % by weight were heated and melted to their melting points, rapidly cooled to a cooling rate per minute of 20 °C and then kept at a temperature of 65 °C. Next, a cellulose pulp powder having a room temperature was thrown into the respective liquid NMMO hydrate solvents. It was, unlike Basic experiment 10, found that the pulp powder was not swollen but dissolved on the surface thereof (not fully dissolved) at the temperature of 95 °C in the liquid NMMO hydrate solvents having the water contents of 10.5 %, 13 % and 17 % by weight and the pulp powder was only swollen, without any dissolving process, in the liquid NMMO hydrate solvent having the water contents of 19 % and 21 % by weight.

<Basic Experiment 12>

NMMO hydrate solvents having water contents of 8 %, 13 %, 19 %, 20 % and 21 % by weight were heated and melted to their melting points and then kept at a temperature of 95 °C. Next, a cellulose pulp powder having a room temperature was thrown into the respective liquid NMMO hydrate solvents. The cellulose pulp powder was thrown at the temperature of 65 °C in the same process as in Basic experiment 9 and after swelling, heated to a temperature of 150 °C. It was found that the pulp powder was swollen and fully dissolved in the liquid NMMO hydrate solvents having the water contents of 8 %, 13 % and 19 % by weight and the pulp powder was only swollen, without any dissolving process, in the liquid NMMO hydrate solvent having the water contents of 20 % and 21 % by weight, even if it was heated to the temperature of 150 °C.

Preliminary Experiments: Swelling and Dissolution of the Compressed Pulp Powder in which Apparent Specific Gravity is increased

A normal pulp sheet has an apparent specific gravity of 0.8, and if it is powdered, the pulp powder has different average diameters and apparent specific gravity in accordance with the type of a tree. For instance, even if the conditions of the milling are the same, the average diameter and apparent specific gravity of the normal pulp powder of a needle-leaf tree are 50 μm and 0.08, and the average diameter and apparent specific gravity of the normal pulp powder of a broadleaf tree are 16 μm and 0.05. Hence, in order to convey a predetermined amount of pulp powder in great quantities irrespective of the kind of a tree, the pulp powder should be compressed, thereby increasing the apparent specific gravity thereof. The cellulose pulp powder was compressed at the twin-screw variable pitch screw supplier (having a diameter of 45 mm, L/D of 7 and an initial P/D of 1.5) whose pitch interval 'P' was decreased in a convey advancing direction and then supplied to the side of the first block of the twin-screw swollen-mixture producing machine (having a diameter of 60 mm and L/D 20) (see Figs. 4 and 7). When the pulp powder was thrown into the twin-screw swollen-mixture producing machine, the NMMO hydrate having a water content in the range of 8 % to 18 % by weight was melted and cooled at a temperature of 64 °C or 70 °C by using a dried air at a room temperature. Then, the cooled NMMO hydrate was injected on the top end of the first block of the twin-screw swollen-mixture producing machine (see Figs. 4 to 6). The swelling and dissolving behaviors of the cellulose powder in the NMMO hydrate were observed on the twin-screw variable pitch screw supplier and the twin-screw swollen-mixture producing machine. As apparent from Fig. 3, the liquid NMMO hydrate solvents supercooled to the temperatures of 64 °C and 70 °C corresponded to the region where the irreversible swelling and dissolution of the cellulose co-existed and the region where the dissolution of the cellulose existed, such that the swelling and dissolution of the cellulose were simultaneously generated. The temperatures corresponded to the solid phase moving region of the single-screw extruder connected for a continuous process with the twin-screw swollen-mixture producing machine. The following preliminary experiments were carried out in order to observe the swelling and dissolving behaviors of the cellulose powder in the liquid NMMO hydrate at the single-screw extruder.

<Preliminary Experiment 1>

Liquid NMMO hydrate solvents supercooled to the temperatures of 64 °C and 70 °C were respectively injected on the top end of the first block of the twin-screw swollen-mixture producing machine. Next, cellulose pulp powder having an apparent specific gravity of 0.05 (Sappi, a broadleaf tree) and 0.08 (V-60, a needle-leaf tree) were respectively supplied by a predetermined amount thereof to the side of the first block of the twin-screw swollen-mixture producing machine, by using a constant pitch twin-screw screw supplier (see Fig. 7). The concentration of cellulose of the cellulose NMMO solution was in the range of 5 % by weight to 12 % by weight. After observing the swollen mixture that was passed through the twin-screw swollen-mixture producing machine whose entire sections were heated at the same temperature as of the supercooled liquid NMMO hydrate solvent and then discharged to an outlet by a polarizing microscope, it was found that the pulp powder was swollen at a temperature of 64 °C, irrespective of its tree kind. The swelling of the pulp powder at the temperature of 64 °C was greater than that at the temperature of 70 °C. The swollen mixture was heated to a temperature of 95 °C on the polarizing microscope on which a hot stage was mounted, such that it was found that the swollen mixture was all dissolved. The solution made by conveying the swollen mixture by the single-screw extruder and dissolving it had a slightly deeper brown than that on the polarizing microscope.

<Preliminary Experiment 2>

The experiment conditions were made in the same manner as in Preliminary experiment 1, except that in place of the constant pitch twin-screw screw supplier in Preliminary experiment 1, a variable pitch screw is used such that cellulose pulp powders having apparent specific gravity of 0.05 (Sappi) and 0.08 (V-60) were passed through the twin-screw supplier, thereby adjusting their apparent specific gravity to 0.1. As a result, it was found that the solution made in this process was the same as Preliminary experiment 1.

<Preliminary Experiment 3>

The experiment conditions were made in the same manner as in Preliminary experiment 2, except that the cellulose pulp powders having apparent specific gravity of 0.05 (Sappi) and 0.08 (V-60) were adjusted to have the apparent specific gravity of 0.2. As a result, it was found that the solution made in this process was the same as Preliminary experiment 1.

<Preliminary Experiment 4>

The experiment conditions were made in the same manner as in Preliminary experiment 1, except that the cellulose pulp powders having apparent specific gravity of 0.05 (Sappi) and 0.08 (V-60) were adjusted to have the apparent specific gravity of 0.27, unlike Preliminary experiment 2. It was found that the cellulose powders produced by the contact with the supercooled NMMO hydrate to a temperature of 64 °C were swollen irrespective of their tree kind. However, the Sappi was swollen in the supercooled liquid NMMO hydrate to a temperature of 70 °C and if heated to a temperature of 95 °C, remained partly on the undissolved state. On the other hand, the V-60 was swollen in the supercooled liquid NMMO hydrate to a temperature of 70 °C, from which the same result as Preliminary experiment 1 was observed. If the V-60 was heated to a temperature of 95 °C, the heating result was the same as Preliminary experiment 1.

<Preliminary Experiment 5>

The experiment conditions were made in the same manner as in Preliminary experiment 1, except that the cellulose pulp powder having an apparent specific gravity of 0.05 (Sappi) was adjusted to have the apparent specific gravity of 0.3 and the cellulose pulp powder having an apparent specific gravity of 0.08 (V-60) was adjusted to have the apparent specific gravity of 0.45, unlike Preliminary experiment 2. It was found that the cellulose powders produced by the contact with the supercooled NMMO hydrate to a temperature of 64 °C were swollen irrespective of their tree kind. However, the pulp powders were swollen only on their surfaces in the supercooled NMMO hydrate to a temperature of 70 °C irrespective of their tree kind. If they were heated to a temperature of 95 °C, they formed a film on their surfaces, such that the cellulose powders were not completely dissolved.

It is appreciated from Preliminary experiments that as the apparent specific gravity of the pulp powder is increased, the pulp powder forms a gel film on the surface thereof in the supercooled liquid NMMO hydrate to a temperature of 70 °C, thereby making it difficult to be swollen and dissolved. In case of Sappi having the apparent specific gravity of 0.3, if it is firstly contacted with the liquid NMMO solvent at a temperature of 70 °C, it forms a thin gel film on the surface thereof. As a result, if the Sappi is heated to a temperature of 95 °C, it is not completely dissolved. To the contrary, the Sappi is firstly contacted with the liquid NMMO solvent at a temperature of 64 °C, it does not form the gel film on the surface thereof, such that the liquid NMMO solvent is diffused into the interior of the cellulose powder, thereby causing a high swelling of the cellulose powder.

Based upon the Preliminary experiments, the following experiments were carried out.

<Experiment 1>

A liquid NMMO monohydrate solvent (having a water content of 13.3 % by weight) that was fully melted at a temperature of 95 °C was supplied in a weight of 734 kg per hour to a gear pump. A convey pipe (having a diameter of 25. 4 mm) was attached to a ring-shaped discharging hole (having a diameter of 60 mm) comprised of 64 nozzle holes (each having a diameter of 0.1 mm) on the end portion thereof. The discharging hole installed a cooling air induction pipe on the center thereof, such that the solvent stream that was passed through the injection nozzles on the discharging hole as shown in Fig. 5 met with a dried cooling air of a temperature of 15 °C that was injected in an airflow per hour of 1400 m$^3$ in every direction from cooling air injection nozzles, in a perpendicular direction thereto and as a result, the liquid NMMO monohydrate solvent was rapidly cooled to a temperature of 50 °C (see Fig. 5). The rapidly cooled liquid NMMO monohydrate solvent was injected on the top end of the first block of the twin-screw swollen-mixture producing machine.

On the other hand, a cellulose pulp (Sappi) powder having a degree of polymerization by weight (DPw) of 1050, an average diameter of 16 μm, an apparent specific gravity of 0.05 was passed through at a twin-screw variable pitch screw supplier (having a diameter of 45 mm, L/D of 7 and an initial P/D of 1.5) whose pitch interval 'P' was decreased in a convey advancing direction, such that the cellulose pulp powder was compressed to have an apparent specific gravity of 0.3. Then, the compressed pulp powder at a room temperature was supplied in a weight per hour of 100 kg to the side of the first block of the twin-screw swollen-mixture producing machine (having a diameter of 60 mm and L/D 20) (see Figs. 4 and 7). The temperature set for the five blocks (see Fig. 4) of the twin-screw swollen-mixture producing machine was 40 °C. While passing through the five blocks, the pulp powder and the supercooled liquid NMMO monohydrate solvent were conveyed and entirely mixed, thereby producing the swollen powder that was forced into the interior of the NMMO solvent. The swollen powder was continuously conveyed to the single-screw extruder (having a diameter of 120 mm and L/D 30). The temperature distribution of the single-screw extruder was set at a temperature of 60 °C on the solid phase moving region, at a temperature of 90 °C on the dissolution region, at a temperature of 100 °C on the dissolution moving region and at a temperature of 100 °C on the die region. The safety limit pressure on the front end of the discharge region on the single-screw extruder was set to an air pressure of 70 and the number of rotation per minute of the screw was 150. It was observed that the solution that was passed through the die region of the single-screw extruder was completely defoamed and dissolved. The color of the solution was yellows and the DPw of the cellulose collected from the solution was 980. The AOOD of the NMMO water solution collected from the solution was 0.0008.

<Experiment 2>

The treatment conditions were made in the same manner as in Embodiment 1, except that a preheater was attached to the twin-screw variable pitch screw supplier and thus, the pulp powder was heated to a temperature of 40 °C.

The solution that was passed through the die region of the single-screw extruder was completely dissolved in the same manner as in Embodiment 1, and the DPw of the cellulose collected from the solution was almost same as Embodiment 1. Also, the AOOD of the NMMO water solution collected from the solution was almost same as Embodiment 1. When compared to Embodiment 1, it was found that the pulp powder at the room temperature could be used, without any preheating to the temperature of 40 °C.

<Experiment 3>

The treatment conditions were made in the same manner as in Embodiment 1, except that the dried cooling air at a temperature of 15 °C induced to the center of the discharging hole was injected in an airflow per hour of 2100 $m^3$ and thus, a liquid NMMO monohydrate solvent rapidly cooled to a temperature of 40 °C was obtained. The solution that was passed through the die region of the single-screw extruder was completely dissolved in the same manner as in Embodiment 1, and the DPw of the cellulose collected from the solution was almost same as Embodiment 1. Also, the AOOD of the NMMO water solution collected from the solution was almost same as Embodiment 1. It was found that the swelling region of the cellulose had the same results when compared to Embodiment 1.

<Experiment 4>

The treatment conditions were made in the same manner as in Embodiment 1, except that the dried cooling air at a temperature of 15 °C was injected in an airflow per hour of 450 $m^3$ and thus, a liquid NMMO monohydrate solvent supercooled to a temperature of 65 °C was obtained. The solution that was passed through the die region of the single-screw extruder had a slight deeper brown than that in Embodiment 1. The solution had no problem in any spinning process. However, the DPw of the cellulose collected from the solution was 950 and the AOOD of the NMMO water solution collected from the solution was 0.0010.

<Experiment 5>

The treatment conditions were made in the same manner as in Embodiment 1, except that the cooling air was not induced from the center of the discharging hole, but induced from the outside of the NMMO solvent stream, to rapidly cool the NMMO solvent stream that was passed through the 64 nozzle holes (each having a diameter of 0.1 mm) of the discharging hole, that is, the cooling air was induced to a ring hollow having 64 nozzle holes (each having a diameter of 0.06 mm) on the outside of the NMMO solvent stream and each of the nozzle holes was formed to meet the cooling air with the solvent stream over 30 °, that the dried cooling air at a temperature of 15 °C was supplied in an airflow per hour of 1140 $m^3$, and that the NMMO hydrate having a water content of 8 % by weight melted at a temperature of 135 °C was supplied in an amount per hour of 734 kg and rapidly cooled to a temperature of 65 °C as the dried cooling air. The solution that was passed through the die region of the single-screw extruder was completely dissolved in the same manner as in Embodiment 1 and exhibited slight higher viscosity and deeper brown than those in Embodiment 1. The DPw of the cellulose collected from the solution was 930 and the AOOD of the NMMO water solution collected from the solution was 0.0011.

As discussed above, a process for preparing a homogeneous cellulose solution according to the present invention is capable of producing a cellulose pulp mixing powder that is first swollen in a liquid NMMO solvent supercooled under a melting point by minimizing the dissolution of cellulose by the liquid NMMO solvent and maximizing the swelling thereof by the liquid NMMO solvent, thereby resulting in a maximum homogeneity of the solution and maintaining the minimized decomposition states of the cellulose and the NMMO solvent, thereby resulting in the improvement of productivity and the simplicity of the process.

**Claims**

1. A process for preparing a homogeneous cellulose solution by using a liquid N-methylmorpholine-N-oxide (NMMO) hydrate solvent, said process comprising the steps of:

- subjecting the liquid NMMO hydrate solvent melted to a rapid cooling to make it supercooled under a melting point; and

- mixing the supercooled liquid NMMO hydrate solvent with a cellulose pulp powder and swelling the resulting mixture;
- subjecting then the thus - produced powder to a dissolution treatment.

2. The process of claim 1, wherein said supercooling step is carried out by injecting a cooling air to an injection stream of the liquid NMMO hydrate solvent.

3. The process of claim 1, wherein said liquid NMMO hydrate solvent has a water content in the range of 8 % by weight to 18 % by weight.

4. The process of claim 1, wherein said liquid NMMO hydrate solvent has a water content in the range of 8 % by weight to 14 % by weight.

5. The process of claim 1, wherein said liquid NMMO hydrate solvent supercooled is rapidly cooled to a temperature of 65° C or less.

6. The process of claim 1, wherein said liquid NMMO hydrate solvent supercooled is rapidly cooled to a temperature of 50° C or less.

7. The process of claim 1, wherein said liquid NMMO hydrate solvent supercooled is rapidly cooled at a cooling rate per minute of 20° C or more.

8. The process of claim 1, wherein said liquid NMMO hydrate solvent supercooled is rapidly cooled at a cooling rate per minute of 60° C or more.

9. The process of claim 1, wherein said cellulose pulp powder mixed with said liquid NMMO hydrate solvent supercooled has a temperature range of a room temperature to 50° C.

10. The process of claim 1, wherein said cellulose pulp powder mixed with said liquid NMMO hydrate solvent supercooled has a temperature range of a room temperature to 40° C.

11. The process of claim 1, wherein said pulp powder has a diameter of 1000 μm or less.

12. The process of claim 1, wherein said pulp powder has an apparent specific gravity in the range of 0.1 to 0.5.

13. The process of claim 1, wherein the mixing and swelling steps of the liquid NMMO hydrate solvent supercooled and the pulp powder are carried out at a temperature range of a room temperature to 65° C.

**Revendications**

1. Procédé destiné à préparer une solution de cellulose homogène à partir d'un solvant d'hydrate de N-oxyde de N-méthylmorpholine (NMMO) liquide, ledit procédé comprenant les étapes de:

- soumettre le solvant d'hydrate de NMMO, liquide et fondu, à un refroidissement rapide de façon à ce qu'il soit en surfusion au-dessous d'un point de fusion; et
- mélanger le solvant d'hydrate de NMMO, liquide et en surfusion, avec une poudre de pâte de cellulose et faire gonfler le mélange résultant;
- soumettre ensuite la poudre ainsi produite à un traitement de dissolution.

2. Procédé selon la revendication 1, dans lequel ladite étape de surfusion est réalisée en injectant un air de refroidissement dans un courant d'injection du solvant d'hydrate de NMMO liquide.

3. Procédé selon la revendication 1, dans lequel ledit solvant d'hydrate de NMMO liquide a une teneur en eau située dans une gamme de valeurs comprises entre 8 % en poids et 18% en poids.

4. Procédé selon la revendication 1, dans lequel ledit solvant d'hydrate de NMMO liquide a une teneur en eau située dans une gamme de valeurs comprises entre 8 % en poids et 14% en poids.

**5.** Procédé selon la revendication 1, dans lequel ledit solvant d'hydrate de NMMO, liquide et en surfusion, est rapidement refroidi jusqu'à une température de 65° C ou moins.

**6.** Procédé selon la revendication 1, dans lequel ledit solvant d'hydrate de NMMO, liquide et en surfusion, est rapidement refroidi jusqu'à une température de 50° C ou moins.

**7.** Procédé selon la revendication 1, dans lequel ledit solvant d'hydrate de NMMO, liquide et en surfusion, est rapidement refroidi à une vitesse de refroidissement par minute de 20° C ou plus.

**8.** Procédé selon la revendication 1, dans lequel ledit solvant d'hydrate de NMMO, liquide et en surfusion, est rapidement refroidi à une vitesse de refroidissement par minute de 60° C ou plus.

**9.** Procédé selon la revendication 1, dans lequel ladite poudre de pâte de cellulose mélangée avec ledit solvant d'hydrate de NMMO, liquide et en surfusion, a une température située dans une gamme de valeurs comprises entre la température ambiante et 50° C.

**10.** Procédé selon la revendication 1, dans lequel ladite poudre de pâte de cellulose mélangée avec ledit solvant d'hydrate de NMMO, liquide et en surfusion, a une température située dans une gamme de valeurs comprises entre la température ambiante et 40° C.

**11.** Procédé selon la revendication 1, dans lequel ladite poudre de pâte a un diamètre de 1000 μm ou moins.

**12.** Procédé selon la revendication 1, dans lequel ladite poudre de pâte a une gravité spécifique apparente située dans une gamme de valeurs comprises entre 0,1 et 0,5.

**13.** Procédé selon la revendication 1, dans lequel les étapes de mélange et de gonflement du solvant d'hydrate de NMMO, liquide et en surfusion, et de la poudre de pâte sont réalisées à une température située dans une gamme de valeurs comprises entre une température ambiante et 65° C.

**Patentansprüche**

**1.** Verfahren zur Herstellung einer homogenen Celluloselösung durch Verwendung eines flüssigen N-Methylmorpholin-N-oxid-(NMMO)-Hydrat-Lösungsmittels, wobei das Verfahren folgende Stufen umfasst:

- Rasche Abkühlung des flüssigen geschmolzenen NMMO-Hydrat-Lösungsmittels, um es unter einen Schmelzpunkt zu unterkühlen,
- Mischen des unterkühlten NMMO-Hydrat-Lösungsmittels mit einem Cellulosebreipulver und Quellung des erhaltenen Gemisches und
- Lösungsbehandlung des so erhaltenen Pulvers.

**2.** Verfahren nach Anspruch 1, bei dem die Stufe der Unterkühlung durch Einspritzen einer Kühlluft in einen Einspritzstrom des NMMO-Hydrat-Lösungsmittels durchgeführt wird.

**3.** Verfahren nach Anspruch 1, bei dem das flüssige NMMO-Hydrat-Lösungsmittel einen Wassergehalt im Bereich von 8 bis 18 Gew.-% aufweist.

**4.** Verfahren nach Anspruch 1, bei dem das flüssige NMMO-Hydrat-Lösungsmittel einen Wassergehalt im Bereich von 8 bis 14 Gew.-% aufweist.

**5.** Verfahren nach Anspruch 1, bei dem das flüssige unterkühlte NMMO-Hydrat-Lösungsmittel auf eine Temperatur von 65°C oder darunter rasch abgekühlt wird.

**6.** Verfahren nach Anspruch 1, bei dem das flüssige unterkühlte NMMO-Hydrat-Lösungsmittel auf eine Temperatur von 50°C oder darunter rasch abgekühlt wird.

**7.** Verfahren nach Anspruch 1, bei dem das flüssige unterkühlte NMMO-Hydrat-Lösungsmittel auf eine Temperatur von 20°C oder darüber rasch abgekühlt wird.

8. Verfahren nach Anspruch 1, bei dem das flüssige unterkühlte NMMO-Hydrat-Lösungsmittel bei einer Kühlgeschwindigkeit pro Minute von 60°C oder darüber rasch abgekühlt wird.

9. Verfahren nach Anspruch 1, bei dem das mit dem flüssigen unterkühlten NMMO-Hydrat-Lösungsmittel gemischte Cellulosebreipulver einen Temperaturbereich von Raumtemperatur bis 50°C aufweist.

10. Verfahren nach Anspruch 1, bei dem das mit dem flüssigen unterkühlten NMMO-Hydrat-Lösungsmittel gemischte Cellulosebreipulver einen Temperaturbereich von Raumtemperatur bis 40°C aufweist.

11. Verfahren nach Anspruch 1, bei dem das Breipulver einen Durchmesser von 1000 μm oder weniger aufweist.

12. Verfahren nach Anspruch 1, bei dem das Breipulver ein scheinbares spezifisches Gewicht im Bereich von 0,1 bis 0,5 aufweist.

13. Verfahren nach Anspruch 1, bei dem die Stufen des Mischens und Quellens des flüssigen unterkühlten NMMO-Hydrat-Lösungsmittels und des Breipulvers bei einer Temperatur in einem Bereich von Raumtemperatur bis 65°C durchgeführt wird.

# FIG. 1

$T_m$: melting temperature

$T_{c1}$, $T_{c2}$, $T_{c3}$: crystallization temperature

L: liquid NMMO hydrate

$C_1$: NMMO hydrate being crystallized at 80 °C or more

$C_2$: NMMO hydrate being crystallized at 20 to 80 °C

$C_3$: NMMO hydrate being crystallized at 33 °C or less

# FIG. 2

# FIG. 3

A: dissolution region of cellulose

B: irreversible swelling region of cellulose

C: reversible swelling region of cellulose

Dotted line: Divided line according to basic experiment

Fine Solid line: crystallization temperature curve of NMMO hydrate (crystallization temperature at cooling rate per minute of 10 °C

# FIG. 4

Liquid NMMO hydrate solvent

| Block 1 | Block 2 | Block 3 | Block 4 | Block 5 |

Uni-axial extruder

Twin-screw variable pitch screw supplier

Cellulose powders

High homogeneous cellulose solution

Block 1: supply section of pulp powder and liquid
          NMMO hydrate solvent rapidly cooled under
          melting point

Block 2: mixing and agitation section for
          producing cellulose-swollen mixture

Block 3: conveying and homogenizing section

Block 4: packaging and measuring section

# FIG. 5

1- melted NMMO pouring

2- NMMO injection nozzle

3- cooling air injection nozzle

4- discharging of liquid NMMO supercooled under melting point

5- cooling air pouring,

6- injected liquid NMMO

# FIG. 6

1- melted NMMO pouring

2- NMMO injection nozzle

3- cooling air ring injection nozzle

4- discharging of liquid NMMO supercooled under
   melting point

5- cooling air pouring

6- cooling air discharging

7- injected liquid NMMO

# FIG. 7

1- pulp powder pouring

2- twin-screw variable pitch screw supplier

3- compressed powder conveying

4- injection pouring of liquid NMMO supercooled under melting point

5- block 1 of twin-screw swollen-mixture producing machine